Europäisches Patentamt

European Patent Office

Office européen des brevets

(11) Publication number: **0 464 203 A1**

## EUROPEAN PATENT APPLICATION
### published in accordance with Art. 158(3) EPC

(21) Application number: **90904667.4**

(22) Date of filing: **16.03.90**

(86) International application number:
**PCT/JP90/00355**

(87) International publication number:
**WO 90/11258 (04.10.90 90/23)**

(51) Int. Cl.⁵: **C04B 28/02**, C04B 40/00, C04B 41/61

(30) Priority: **17.03.89 JP 63532/89**
**22.03.89 JP 67459/89**
**17.05.89 JP 123965/89**
**23.06.89 JP 159411/89**
**06.07.89 JP 172921/89**
**13.07.89 JP 179118/89**
**01.08.89 JP 198005/89**
**18.09.89 JP 239863/89**
**18.10.89 JP 269095/89**
**01.11.89 JP 283112/89**
**13.11.89 JP 292447/89**
**17.01.90 JP 6407/90**
**13.02.90 JP 29658/90**

(43) Date of publication of application:
**08.01.92 Bulletin 92/02**

(84) Designated Contracting States:
**AT BE CH DE DK ES FR GB IT LI LU NL SE**

(71) Applicant: **MITSUO, Koji**
**Mezon Wada 402 28-7, Miyanosaka 1-chome**
**Setagaya-ku**
**Tokyo 156(JP)**

Applicant: **MITSUO, Mitsuko**
**Mezon Wada 402 28-7, Miyanosaka 1-chome**
**Setagaya-ku**
**Tokyo 156(JP)**

Applicant: **MITSUO, Hiroshi**
**Mezon Wada 402 28-7, Miyanosaka 1-chome**
**Setagaya-ku**
**Tokyo 156(JP)**

(72) Inventor: **MITSUO, Koji**
**Mezon Wada 402 28-7, Miyanosaka 1-chome**
**Setagaya-ku**
**Tokyo 156(JP)**
Inventor: **MITSUO, Mitsuko**
**Mezon Wada 402 28-7, Miyanosaka 1-chome**
**Setagaya-ku**
**Tokyo 156(JP)**
Inventor: **MITSUO, Hiroshi**
**Mezon Wada 402 28-7, Miyanosaka 1-chome**
**Setagaya-ku**
**Tokyo 156(JP)**

(74) Representative: **Vossius & Partner**
**Siebertstrasse 4 P.O. Box 86 07 67**
**W-8000 München 86(DE)**

(54) HYDRAULIC SUBSTANCE, METHOD OF PRODUCING AND CURING THE SAME, CURING CHAMBER, AND PAINT.

㊹ A method of producing and curing a hydraulic substance and a curing chamber and a paint used in this method in order to prevent cracking of a hardened article and making the same difficulty water-absorbent and highly strong by controlling the formation of an efflorescent component in the step of hardening the hydraulic substance. The method of production comprises using an aqueous solution of lime instead of water to retard the evaporation of water to thereby form dense $CaCO_3$, thus giving a hardened article having a reduced water-absorbency and an increased strength. The method of curing is characterized by conducting the curing while

suppressing the evaporation of water or making up for water lost in the step of hardening. Examples of the method include one which comprises conducting curing through, e.g., air drying and supplying water to the surface of the hydraulic substance as soon as it will not be disintegrated by water or the like, and one which comprises injecting at least one member selected from among a fluid which reacts with an efflorescent component, an aqueous solution of lime and a synthetic resin emulsion containing a reactant into the hardened hydraulic substance. The curing chamber includes one provided with a ceiling heater to prevent dewing and one provided with a steam generator, a temperature sensor, a temperature setting device, a temperature control unit, and so forth. The paint comprises a cement slurry and/or a synthetic resin emulsion and a reactant or a colorant and serves to prevent the occurrence of efflorescence.

# F I G. 9

### Fields of Industrial Use

This invention relates to method for producing and curing, hydraulic material capable of prohibiting cracking, making hydraulic material of difficultly-water-absorbent and of water-repellent nature and of highly-strong, making it lustrous at the surface thereof or the contacting surface with frame mold and of efflorescence-controlled; and curing chamber and paints.

**(Definitions)** As used herein, following terms shall have meaning respectively as follows;

"Hydraulic material" means pre-hardened, as well as, hardened cement material, such as, raw mortar and raw concrete. It also includes pre-hardened, as well as, hardened materials which have a nature to harden by reaction, such as, pozzolanic cement reaction and calcium silicate reaction in the presence of water.

"Efflorescence ingredient" means water-soluble compounds containing mainly calcium hydroxide produced by adding water to cement.

"Deficient water" means certain amount of water necessary but deficient to carry out adequate hydration.

"Reaction agent" means composition of paste type, as well as, composition of additive agent type, to be added to emulsion of synthetic resin type, respectively reactive with efflorescence ingredient.

"Reaction liquid" means liquid of impregnation type reactive with efflorescence ingredient.

"Hardened" means to cover the semi-hardened situation where hydraulic material has hardened so that it does not break loose even though water or hot water is added thereto.

"Curing" means every kind of curing of hydraulic materials including but not limited to air-curing and steam-curing.

"Curing while suppressing evaporation of water" means curing conducted under the condition to restrict evaporation of water, such as, sealed-curing, curing in a chamber wherein water or hot water is spread, steam-curing conducted by providing steam into a sealed chamber, high-pressure curing, autoclave curing and the like. Curing under 100% humidity is preferable. However, more or less incomplete degree of sealing will be permissible, if evaporation of water is effectively suppressed.

"Aqueous solution of lime" means aqueous solution where mainly calcium hydroxide is dissolved therein, which is produced by adding water to cement, hydraulic material, slaked lime or quick lime exposed in air.

"As soon as possible after hydraulic material does not break loose regardless of water or hot water added thereto" means at the stage where voids created by evaporation of water are still shallow or small, or amount of calcium carbonate generated at inner wall of said voids is still small. It is difficult to specify such duration of time, because the time when such situation occurs is different depending upon curing temperature etc. Speaking more precisely, within approximately 20 hours in case of the curing at approximately 10° C, within approximately 15 hours in case of the curing at approximately 20° C, within 8 hours in case of the curing of at approximately 45° C and within approximately 6 hours at the curing of 55° C, are respectively preferable. The curing temperature being higher, the time being shorter. However, humidity of curing also has certain relation with such time, therefore, it is not limited to the time above-specified.

"Dehumidifier" means apparatus of every type which operates to liquidate or exclude steam, such as, dehumidifier and dryer available in the market, heat pump and cooler which descend temperature of steam, fan which excludes steam in the curing chamber and auto-door which releases steam in the curing chamber.

### Background of Technology

Various curing methods of hydraulic material (including cement) are known, such as air-curing, curing by sprinkled water, curing employing hydration reaction heat, humid-air-curing, curing-in-water, steam-curing and autoclave curing. Using expanding agent is known to make less shrinkage at hardening of hydraulic material. To make hydraulic material of water-repellent nature, it is known to paint with water-repellent agent. Hydraulic material mixed with water-repellent agent is also known. Further, various efflorescence controlling agent of mixture type and paints of synthetic resin type are available in the market.

In air-curing used for curing hydraulic material, water evaporates from the material at the stage when hydration proceeds less. Thus, much voids are created by evaporation of water from the hydraulic material, which make the hydraulic material of water-absorbent. Further, cohesive power works among cement particles at the evaporation, and hydraulic material shrinks, thus, cracking occurs. Further, when efflorescence ingredient moves toward surface of the hydraulic material, it reacts with carbon dioxide, thereby first efflorescence occurs. Additionally, when efflorescence ingredient is dried and sticks around cement particles or aggregates, and absorbs rain water and dries, it moves toward surface of hydraulic material while evaporation of water proceeds, reaction with carbon dioxide occurs and second efflorescence occurs.

In curing-in-water, dried hydraulic material is subject to curing in water. Thus, the cured hydraulic material is water-absorbent even at the beginning. Moreover, efflorescence ingredient dissolves in water and flows out. Thus, voids are formed at the space where the aqueous solution of efflorescence ingredient flows out. Further, when efflorescence ingredient reacts with carbon dioxide, calcium carbonate is produced, thus, efflorescence ingredient, which might contribute for increasing strength, flows out, accordingly, the product gets more water-absorbent and of lower-strength. Moreover, since efflorescence ingredient dissolves in water, if the hydraulic material is taken out and dried, efflorescence ingredient sticks at the surface thereof, thus, second efflorescence generates. However, due to generation of said water voids, many voids take place in the material, and it is difficult to fill said voids. Accordingly, this method is of no use to get product of difficultly-water-absorbent and of higher-strength.

In humid-air-curing conducted in a sealed curing chamber where water is spread therein, when atmosphere within the curing chamber reaches dew point, evaporation from the hydraulic material may be prevented. However, if temperature is low, amount of water in curing atmosphere gets less. Thus, it is difficult to compensate deficient water. Usually temperature gets higher at the hydraulic material than at the atmosphere within the chamber due to hydration, then water in the hydraulic material evaporates, accordingly, voids occur by evaporation of water, and strength of the material decreases. Further, when temperature within the chamber is higher due to supplied hot water, efflorescence ingredient within the hydraulic material moves toward the surface of the material, thus, first efflorescence occurs.

Steam-curing is in most cases conducted at a temperature of approximately $60^\circ C$ and approximately for $500^\circ C/hr$ to shorten the time for increasing strength. However, in this known curing, it is almost impossible to achieve 100% humidity, because, evaporation has already commenced prior to the steam-curing process, and sealing of the curing chamber is not complete. Moreover, temperature of the hydraulic material gets higher than the temperature of the chamber due to hydration heat accumulated within the material and in the metallic mold. Accordingly, although humidity might be 100% in the chamber, saturate condition is broken at the boarder surface of the hydraulic material and environmental steam, thus, evaporation occurs from the hydraulic material. Due to such evaporation, air comes into a number of such voids. At inner wall of the voids, efflorescence ingredient reacts with carbon dioxide in air and calcium carbonate is produced scatterly or forming many spaces among them. Thus, due to occurrence of calcium carbonate and crystallization of cement gel caused by heat, initial strength does not increase much compared wtih added heat energy, and later strength also does not increase. The hydraulic material thus obtained is water-absorbent.

Autoclave curing is generally conducted after waiting time of 2 - 24 hours to prevent cracking which occur by expansion of air and gas. Accordingly, water evaporates during said waiting time, thus, voids generate by evaporation of water within the material, therefore the product is water-absorbent. Autoclave curing is often conducted after steam-curing and demolding. So water evaporates prior to and during the autoclave curing, thereby voids are created by evaporation of water. Thus, strength does not increase as expected, and resultant material is water-absorbent. Further, efflorescence is apt to occur during the curing.

Curing-using-hydration-heat conducted in a adibatic curing chamber is also known. In this method, demolding can be made earlier by elevating curing temperature up to approximately $50^\circ C$. However, if demold when temperature is still high, for example, on the next day of the curing, efflorescence ingredient moves toward surface of the material together with steam. Accordingly, efflorescence occurs.

Curing by sprinkled water is used for curing of hydraulic material at a stockyard and the like after demolding. In this case much voids have already created by evaporation of water prior to the curing of this type. Further, sprinkling is usually conducted as a matter of form. Thus, water in the hydraulic material evaporates, especially at the portion where water does not reach. Thus, this curing has no substantial effect.

It is also known to paint hardened hydraulic material with water-repellent-agent (including achieving water-repellency by reacting with efflorescence ingredient) to make the material water-repellent. However, it is difficult to fix another painting at painted surface of hydraulic material. Moreover, due to hydrophobic nature, painted repellent agent removes from the surface as time passes. Moreover, hydraulic material decreases strength when mixed with water-repellent material.

Expanding agent is very expensive. Further, much voids occur by evaporation of water when it is used, and using it requires skill of high level.

Occurrence of efflorescence depends upon various conditions, such as, weather, method of producing, etc.. There is no appropriate measure to prevent the same. Even though, known efflorescence control agent of mixture type is used, efflorescence still occurs according to conditions. Further, when hydraulic material of cement is painted with known paint of emulsion type, water in the paint passes into the cement, thereby efflorescence ingredient dissolves out and moves toward the surface, thus, efflorescence occurs. Accordingly, it is difficult to get products of fresh color.

Purpose of this invention is to provide method for producing, curing hydraulic material, curing chamber and paint to solve the problems above-mentioned.

## Disclosure of Invention

From the inventors' observation of the situation where slaked lime, quick lime and cement are respectively added into water, up to producing of saturated aqueous solution, it has been confirmed that dissolved amount is less at the initial stage. Namely, the solution gets saturated approximately five (5)or six (6) hours later. Porous thin film of calcium carbonate is formed at the surface of the solution. If the container is sealed leaving certain space above the surface of the solution, then fine film of calcium carbonate with very fine holes is formed at the surface. Further, when cement paste is molded with 5mm thickness, cracking occurs within approximately two (2) to three (3) hours in Summer and four (4) to eight (8) hours in Winter by shrinkage of the material due to evaporation of water. This invention was created on the basis of the finding that occurrence of efflorescence and strength and water-absorbency of hydraulic material are closely connected with the voids created by evaporation of water at the initial stage of curing and density of aqueous solution of efflorescence ingredient.

Namely, in Summer or curing at high temperature, large amount of water evaporates before dissolving of efflorescence ingredient in water, accordingly, a large number of voids with larger diameter occur by evaporation of water and the material is of lower-strength and water-absorbent. While, less amount of efflorescence ingredient moves toward surface of the material, thus, first efflorescence does not occur, and calcium carbonate adheres at the inner wall of the voids (created by evaporation of water) scatterly or with many spaces, which fairly contributes to increase strength.

On the other hand, in Winter or curing conducted at low temperature, water evaporates slowly, thus, water makes saturated solution of efflorescence ingredient. If water evaporates rapidly due to change of temperature in the morning or evening or by wind, inside efflorescence ingredient moves toward the surface and reacts with carbon dioxide in environmental air, accordingly, first efflorescence occurs. By the way, since evaporation proceeds slowly, cement gel (hereinafter "gel") produces more smoothly, voids are created by evaporation of water with smaller diameter, material is of higher-strength, compared with the case where curing conducted at high temperature. Calcium carbonate adheres more finely at inner wall of the voids compared with the evaporation at high temperature. Thus, the material is less-water-absorbent. Said finding was confirmed by the inventors' long term experiments. This invention was created on the basis of such finding.

## (Description of Invention)

(1) Method of producing hydraulic material according to this Invention is characterized in that pre-hardened hydraulic material is produced by using aqueous solution of calcium hydroxide or aqueous solution of lime, such as, efflorescence ingredient, instead of water, and at need, reaction agent reactive with efflorescence ingredient is further added to such pre-hardened hydraulic material, and subsequently the hydraulic material is molded and subject to curing (this method is hereinafter called "lime-water-method").

In this lime-water-method, hydraulic material is made by using aqueous solution of lime instead of water, thus, alkali in cement itself is preserved. (Saturated aqueous solution is preferable. If water is added by slaked lime or cement at approximately PH 12 so that porous thin film is formed at the surface due to reaction with carbon dioxide, this method is more effective.) Evaporation from the hydraulic material proceeds slower compared with the case where water is used. According ly, gel is formed during the slow evaporation. The resultant material is of higher-strength compared with the case of mixing with ordinary water. Surface of the hydraulic material where exposed to air at the curing is also fairly less-water-absorbent. At the surface contacted with mold, evaporation is especially slow, thus, gel forms better. The product has less voids created by evaporation of water and gets low-water-absorbent. This is because, in the inventors' opinion, layer coated by calcium carbonate is formed at the surface with less voids created by evaporation of water. The material gets water-retentive and additionally gel is formed, thus, strength increases.

If further curing is made supressing evaporation of water, then, the voids gets smaller, distance of formed layer of calcium carbonate gets smaller. Thus, material of difficultly-water-absorbent and higher-

5

strength is obtained.

In case, hydraulic material is prepared by aqueous solution of lime added with reaction agent, the material gets difficultly-water-absorbent, even in case of air-curing, at the surface contacting with mold, and as shown able I below, is of higher-strength compared with the case where no reaction agent is added. This is because, in inventors' opinion, reaction agent reacts slowly with aqueous solution of lime, and fine aggregates are formed thereby, thus, less voids are created by evaporation of water.

In case where a material capable of producing repellent material by reacting with efflorescence ingredient (for example, calcium stearate) is used as the reaction agent, the hydraulic material gets water-repellent.

In the lime-water-method, resultant material is difficultly-water-absorbent, water-repellent, or of low-water-absorbent. Especially, this method is useful in field works, where ordinarily only air-curing is available. By this method, structures of hydraulic material of good quality are available. Further, sludge produced by dehydration of hydraulic material under pressure is seful in the preparation of lime solution used in this method. Accordingly, this method is not only cost-saving but also useful in protection of environment, and can save additional costs for environment protection.

(2) A method of curing hydraulic material according to this invention is characterized in that hardened hydrau lic material prepared by adding reaction agent or not adding reaction agent, or hardened hydraulic material prepared by the method of claim 1, is impregnated or impregnated under pressure with one or more of selected from among reaction agent reactive with efflorescence ingredient, aqueous solution of lime and emulsion of synthetic resin type added with reaction agent, once or more, in the environment of air or carbon dioxide to the extent that the liquid does not collect at the sur face of the hydraulic material and inside efflorescence ingredient does not move toward the surface, thereby inside efflorescence ingredient and/or the impregnated aqueous solution of lime reacts with (a) carbon dioxide in air which mixed with the hydraulic material during mixing step, (b) carbon dioxide or carbon dioxide in air which comes into the voids where water has evaporated, (c) reaction agent or (d) reaction liquid, and at need, film of resin is formed at the surface of the hydraulic material, thereby obtain hydraulic material of second-efflorescence-controlled, of difficultly-water-absorbent and/or water-repellent nature or of higher-strength (hereinafter called "impregnation method").

In this impregnation method, one or more of selected among reaction agent, aqueous solution of lime and emulsion of synthetic resin type added with reaction agent is impregnated to hardened hydraulic material in the manner liquid does not collect at the surface of the hydraulic material and efflorescence ingredient inside the hydraulic material does not move toward the surface thereof. Accordingly, the impregnated liquid diffuses at the deep location of the hydraulic material by capillary action and water in the liquid is used as deficient water, thereby contributes for creating material of higher-strength.

In case where aqueous solution of lime is impregnated, evaporation of water proceeds more slowly compared with the case of impregnation of water. Accordingly, formation of gel proceeds, thus, material of higher-strength can be obtained. While evaporation of water goes on, layer of calcium carbonate having less gap forms at the inside wall of voids created by evaporation of water, accordingly the material is low-water-absorbent.

In case of impregnation of reaction liquid, efflorescence ingredient inside the hydraulic material is consumed by reacting with reaction liquid. Accordingly, movement of efflorescence ingredient toward the surface, which occurs by evaporation of water, is suppressed. Further, efflorescence ingredient make less voids created by evaporation of water, thus, the resultant material is low-water-absorbent and second efflorescence is controlled.

In case of impregnation of emulsion of synthetic resin type added with reaction agent, efflorescence ingredient within the hydraulic material is consumed by reacting with the reaction agent. Further, if the emulsion forms film, the hydraulic material becomes non-water-permeable. Thus, second efflorescence is controlled quite effectively.

In case where calcium stearate solution and the like capable of producing water-repellent material by reacting with efflorescence ingredient is used as the reaction agent or reaction liquid, resultant hydraulic material is water-repellent. In case where one or more of selected among reaction liquid, aqueous solution of lime and emulsion of synthetic resin added with reaction agent; is used, thus, combination of said effects is achieved.

If said liquid is impregnated at high pressure, then the liquid impregnate to the deeper location of the hydraulic material, and second efflorescence is controlled even at such deeper location in the material. Thus, efflorescence is controlled even at the location of the material where resin water does not reach at normal pressure.

(3) Another method of curing hydraulic material according to this invention may be conducted by the method characterized in that hardened or pre-hardened hydraulic material prepared by adding reaction agent or not adding reaction agent, or hardened or pre-hardened hydraulic material prepared by the method of claim 1 is (a) subject to high-pressure curing while suppressing evaporation of water so that inside efflorescence ingredient does not move toward the surface of the hydraulic material, or (b) subject to normal-pressure curing or high-pressure curing under the humidity alternatively switched between 100% and lower than 100% so that dewing does not generate efflorescence, or (c) subject to high temperature curing conducted in a sealed chamber made of airtight and adiabatic material using hydration heat and said sealed chamber is released after the temperature of the hydraulic material descends to substantially normal temperature; respectively in environment of air or carbon-dioxide thereby control movement of efflorescence ingredient toward the surface, thus promote hydration, and obtain hydraulic material of first-efflorescence-controlled and/or second-efflorescence-controlled and of higher-strength (hereinafter called "evaporation-preventing-method").

In this evaporation-preventing-method, curing is conducted by high-pressure curing, curing while suppressing evaporation of water, such as, curing conducted at the humidity alternatively switched between 100% and lower than 100%, or in a sealed chamber, movement of efflorescence ingredient toward the surface does not occur or less occur, accordingly, first efflorescence and second efflorescence can be controlled.

In case of curing conducted in a sealed chamber using hydration heat, it is known that when the chamber is released at high temperature, but first efflorescence occurs due to rapid evaporation of water. However, if the chamber is released at the normal temperature or substantially normal temperature, water evaporates slowly, accordingly, first efflorescence does not occur. The evaporation-preventing method is useful for controlling first and second efflorescence and/or getting product of highly-strong.

(4) Another method for curing hydraulic method according to this invention may be conducted by the method for curing hydraulic material characterized in that pre-hardened hydraulic material is cured (a) in a sealed-curing or steam-curing while suppressing evaporation of water from the hydraulic material or (b) by air-curing; immediately after the hydraulic material does not break loose in spite of adding water or hot water thereto, (i) deficient water is collected on the surface of the hydraulic material or (ii) deficient water is replenished to the hydraulic material intermittently or continuously, or (iii) water is supplied into voids created by evaporation of water by soaking the hydraulic material in water or hot water; respectively while suppressing evaporation of water from the hydraulic material by water at the surface, and, at need, curing is further continuously made by sealed-curing or steam-curing without replenishing deficient water while suppressing evaporation of water from the hydraulic material (hereinafter called "sooner-curing-method").

In this sooner-curing-method, deficient water is replenished to the hydraulic material as soon as after pre-hardened hydraulic material does not break loose notwithstanding water or hot water added thereto, thereby replenish water into the voids created by evaporation of water, and curing is made while suppressing evaporation of water from the hydraulic material itself. Accordingly, much gel produces and produced gel develops even in voids already created by evaporation of water, thus, diameter of the voids gets smaller. Therefore, the resultant material is of higher-strength and lower water-absorbent nature compared with the material under air-curing. Even though smaller amount of water evaporates during the curing conducted while suppressing evaporation of water, fine layer of calcium carbonate is formed at the inner wall of voids created by evaporation of water. Therefore, the resultant material is difficultly-water-absorbent.

If curing is made, prior to replenishing deficient water, while suppressing evaporation from the hydraulic material, then, the nature of difficultly-water-absorbent and strength are further improved.

In case aqueous solution of lime is replenished as deficient water, finer calcium carbonate is produced at the inner wall of voids created by evaporation of water. If reaction liquid is replenished, then efflorescence ingredient reacts with the reaction liquid and/or carbon dioxide, and the reaction product makes voids (created by evaporation of water) of smaller diameter. In case the reaction agent is aqueous solution of calcium stearate and the like, which produces water-repellent material by reacting with efflorescence ingredient (hereinafter "water-repellency donor"), the resultant hydraulic material is of water-repellent nature.

(5) Another method for curing hydraulic material according to this invention may be conducted by the method for curing hydraulic material characterized in that where hardened hydraulic material produced by adding or not adding reaction agent, or hardened hydraulic material produced by the method of claim 1 is, cured by curing conducted while suppressing evaporation of water, such as, sealed-curing, curing in a sealed chamber where water or hot water is replenished, steam-curing conducted by supplying steam into a sealed chamber, high-pressure curing, autoclave curing; the hydraulic material is replenished, prior to or during the curing, and after molding and/or demolding, with water, hot water, reaction liquid, emulsion of synthetic resin type, emulsion of synthetic resin type added by reaction agent or aqueous solution of lime; as deficient water or water to dissolve efflorescence ingredient, by way of water-soaking, or continuous or intermitted humidification by humidifier or vaporizer; thus, hydraulic material of high-strength, difficultly-water-absorbent or efflorescence-controlled nature is obtained (hereinafter called "liquid-replenishing-method").

In this liquid-replenishing-method, water, hot water, reaction liquid, emulsion of synthetic resin type, emulsion of synthetic resin type added by reaction agent or aqueous solution of lime; is replenished as deficient water or water which dissolves efflorescence ingredient, prior to or during the curing conducted while suppressing evaporation of water. Accordingly, even though voids have been created in the hydraulic material by evaporation of water, gel is formed within the voids, therefore the voids get smaller. Thus, the hydraulic material gets higher-strength. If this operation is repeated, voids created by evaporation of water get smaller due to formation of gel within the voids. Thus, if the hydraulic material is taken out from the chamber and water evaporates therefrom, calcium carbonate produces in the voids, and finally, the material gets difficultly-water-absorbent so that it appears as if it were a nature of water-repellency.

Further, when curing is conducted while suppressing evaporation of water, at the situation where the surface of the hydraulic material is always kept wet, water in the hydraulic material does not evaporate, thus, gel forms smoothly. Accordingly, voids created by evaporation of water is extremely small, and the material gets difficultly-water-absorbent and of higher-strength.

When curing is conducted while suppressing evaporation of water by replenishing water or hot water intermittedly, replenishing of water or hot water and curing while suppressing evaporation are repeatedly conducted. In this case, if water or hot water is replenished in the manner where water or hot water does not collect at the surface and inside efflorescence ingredient does not move toward the surface, it is possible to control efflorescence and get material of higher-strength and difficultly-water-absorbent.

When reaction liquid is replenished instead of water or hot water, while gel forms, reaction agent reacts with inside efflorescence ingredient, thus, voids are smaller in size. When reaction liquid is replenished in the manner that the reaction liquid does not collect at the surface and inside efflorescence ingredient does not move toward the surface, control of efflorescence can also be achieved. When aqueous solution of calcium stearate and the like is used as the reaction liquid, then the hydraulic material gets water-repellent.

When emulsion of synthetic resin type is replenished instead of water or hot water, water in the emulsion is consumed to produce gel, and film of synthetic resin emulsion is formed at the surface. Accordingly, the material is non-water-permeable.

When synthetic resin emulsion added with reaction agent is used instead of water or hot water, combination of the above effects (of using reaction liquid and using emulsion) can be achieved.

When aqueous solution of lime is used instead of water or hot water, layer of calcium carbonate with less gap is formed at the inner wall of voids created by evaporation of water, in addition to formation of gel. Accordingly, the hydraulic material of difficultly-water-absorbent nature is available.

As mentioned above, this liquid-replenishing method provides with hydraulic material of higher-strength and water-repellent and/or difficultly-water-absorbent, and control of efflorescence is also achieved.

(6) Another method of curing hydraulic material of this invention may be conducted by the method for curing hydraulic material characterized in that pre-hardened hydraulic material of after molding is cured while suppressing evaporation of water and/or at approximately lower than 50°C in the manner reaction of efflorescence ingredient with carbon dioxide and/or crystallization of cement gel do not proceed, and after molding and/or demolding, steam-curing is conducted, thus, hydraulic material of higher-strength is obtained (hereinafter called "steam-curing-after-demolding-method").

In this steam-curing-after-demolding-method, molded pre-hardened hydraulic material is subject to curing conducted while suppressing evaporation of water and/or at the temperature of approximately lower than 50°C, and subsequent to the demolding, steam-curing is conducted. At the curing after molding, no gel is still crystallized, and calcium carbonate adheres scatterly at the inner wall of voids created by evaporation of water, thus, the voids are less. If steam-curing is conducted after demolding, especially after amount of hydration heat gets less, then evaporation of water from the hydraulic material is less, thus gel produces smoothly and higher-strength is achieved. This method is suitable to get hydraulic material of higher-strength.

(7) Hydraulic material cured by the liquid-replenishment-method of said (5) is characterized in that fine and difficultly-water-absorbent film and/or water-repellent film is, as a whole, formed at the outer layer thereof, which film is mainly composed of calcium carbonate compounds, calcium stearic or calcium silicate, and at which film voids created by evaporation of water are blocked or such voids are extremely less in number (hereinafter called "difficultly-water-absorbent hydraulic material").

In this difficultly-water-absorbent hydraulic material, fine and difficultly-water-absorbent or water-repellent layer is formed, as a whole, at the outer layer of the materials. Thus, void created by evaporation of water is blocked or of quite small size and gel is formed. Accordingly, the material is difficultly-water-absorbent and/or water-repellent. In case of the material not water-repellent, painting can be applied on the surface of the material. Thus, the material is protected by both of said fine layer and the paint. Rain water and sea water are substantially non-permeable, thus, solution of inside alkali is prevented, accordingly, erosion of steel ferro-reinforce material can be prevented and the ferro-reinforced concrete made by this material is quite durable.

In case of the material of water-repellent nature, voids created by evaporation of water are blocked, or the voids are less in number, or finer layer is formed in the voids compared with the case where hydraulic material gets water-repellent under air-curing after being impregnated with aqueous solution of silicon or kalium stearate. In the hydraulic material, gel closely bonds with water-repellent material, such as calcium stearate, thus, material gets very durable. In the difficultly-water-absorbent hydraulic material, inside alkali is preserved, accordingly, in case of ferro-reinforced concrete, the article is anti-erosive.

(8) The first curing chamber of hydraulic material in this invention is characterized in that heat generator is installed at the ceiling or wall of the chamber (hereinafter called "dew-preventing-curing chamber").

In this dew-preventing-curing chamber, heat generator is provided at the ceiling and/or wall inside the chamber, thereby high temperature zone is formed at the ceiling and/or wall inside the chamber, where temperature is higher than temperature in the chamber. Even though humidity in the chamber reaches 100% by placing water or hot water in the chamber or by providing steam into the chamber, dew is not formed at the ceiling and/or wall of the chamber due to the high temperature zone. Decrease of humidity in the curing chamber which promote evaporation of water from hydraulic material is prevented in this chamber, thus, favorable curing can be conducted.

Curing hydraulic material through this curing chamber while suppressing evaporation of water comes under the liquid-replenishing-method. Because, water dewed in air and at the surface of the hydraulic material is replenished to the hydraulic material. This curing chamber is especially suitable to conduct the curing of above (3), (4), (5) and (6).

In this chamber, evaporation of water from the hydraulic material is less, moreover, dropping of dew is prevented. Thus, it provides with curing of good condition.

(9) Another curing chamber for hydraulic material in this invention is characterized in that it is equipped with steam generator, such as, water vessel equipped with heat generator, temperature detector detecting temperature of water or hot water in the steam generator and/or space within the chamber, temperature fixing device fixing desired temperature and temperature controlling unit equipped with temperature controller which controls temperature within the chamber at desired level on the basis of the detected temperature detected by said temperature detector and the temperature fixed by said temperature fixing device and one or more of selected from among humidifier, sprinkler, vaporizer, dehumidifier installed therein, and heat generator installed at the ceiling thereof and heat generator installed at the wall thereof, and at need, apparatus for controlling humidity and apparatus for controlling pressure (hereinafter called "temperature-controlling-curing-chamber").

This temperature-controlling-curing-chamber is equipped with one or more of selected among humidifier, sprinkler, vaporizer, dehumidifier, heat generator equipped at the ceiling and heat generator equipped at the wall of the chamber, in addition to steam generator and temperature-managing apparatus.

Although, 100% humidity may be realized by simply placing water into water vessel, curing at 100% humidity can be effectively achieved at desired temperature by controlling temperature. Further, replenishment of deficient water is achieved by humidifier, sprinkler or vaporizer, or liquidation of steam by means of dehumidifier. Moreover, this chamber enables to conduct curing alternatively at 100% humidity and below. Heat generator installed at the ceiling and/or wall of the chamber prevents dewing at the ceiling and/or wall. By such function, this chamber can achieve suppressing evaporation of water from the hydraulic material. Further, installing optionally with apparatus for controlling humidity and apparatus for controlling pressure enables curing conducted under controlling humidity and pressure.

In this temperature-controlling-curing-chamber, various methods for curing can be conducted under automtic control. In case of the chamber of smaller scale, chamber of this type is useful as a experiment/test cham ber whereby effect of various curing conditions is tested.

(10) Another curing chamber for hydraulic material in this invention is characterized in that one water-soaking-vessel is connected with other water-soaking-vessel or water-supply-vessel so that water or hot water can flow alternatively from one vessel to other and vice versa (hereinafter called "curing chamber of water-vessel-type").

In this curing chamber of water-vessel-type, water or reaction liquid can be replenished without moving the location of the hydraulic material. Moreover, curing conducted alternatively at 100% humidity and below can be achieved easily. Accordingly, the chamber of this type is useful for getting hydraulic material of difficultly-water-absorbent and higher-strength.

(11) Paint in this invention is characterized in that it is prepared by adding reaction agent and, at need, coloring material, to slurry of cement or emulsion of synthetic resin type (hereinafter called "paint of reaction type"). This paint is suitable for painting the hydraulic material above described.

The paint of reaction type is prepared by adding reaction agent to slurry of cement or emulsion of synthetic resin type. At need, coloring material is further added thereto. In case of the paint prepared by adding reaction agent to slurry of cement, reaction agent reacts with efflorescence ingredient, thus, efflorescence ingredient less reacts with carbon dioxide. Accordingly, generation of efflorescence is controlled. In case the paint prepared by adding reaction agent to emulsion of synthetic resin type is painted to hydraulic material, the reaction agent impregnates into the hydraulic material and reacts with efflorescence ingredient therein. Thus, generation of efflorescence is controlled.

(12) Another paint in this invention is characterized in that paste is prepared by using cement which contains substantially no efflorescence ingredient, such as, cement where efflorescence ingredient is removed by washing with water, or cement washed by water after reacting with sugar water or acid, and added with coloring material thereto and, at need, reaction agent or emulsion of synthetic resin (hereinafter called "paint of slurry type").

In this paint of slurry type, cement where efflorescence ingredient is removed and, at need, further reacted with reaction agent is used. Therefore, efflorescence does not produce.

If water-reducing agent is used as the reaction agent in the preparation of both paint of reaction type and paint of slurry type, coated film of high-strength is available.

## Brief Explanation of Drawings

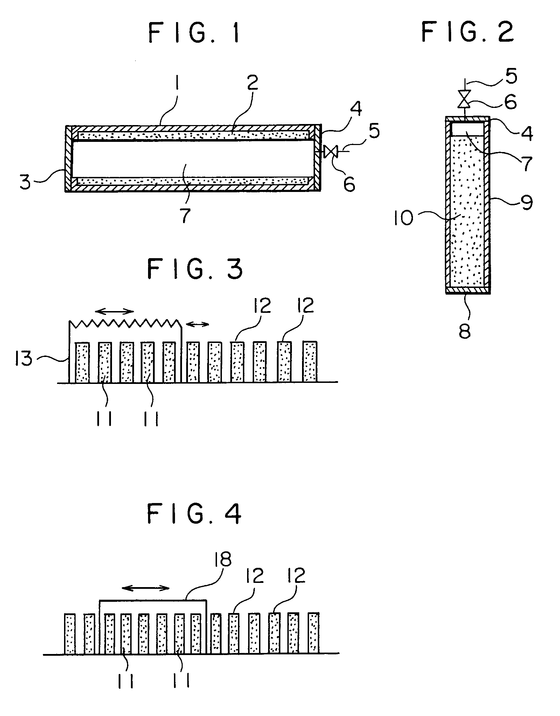

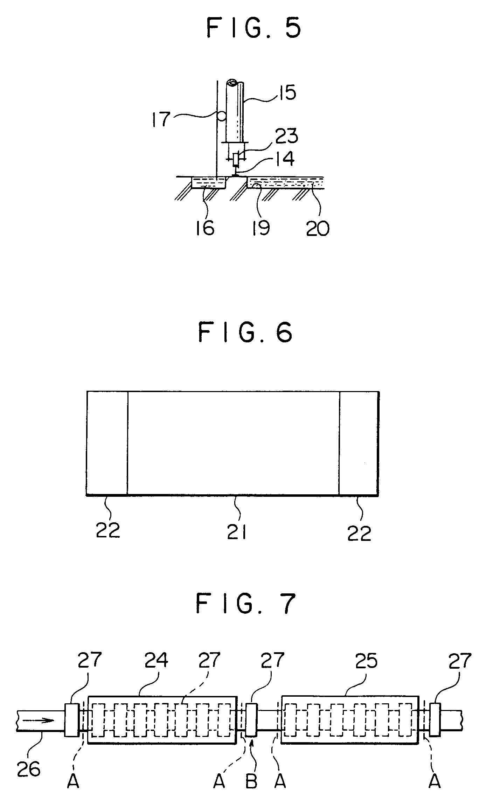

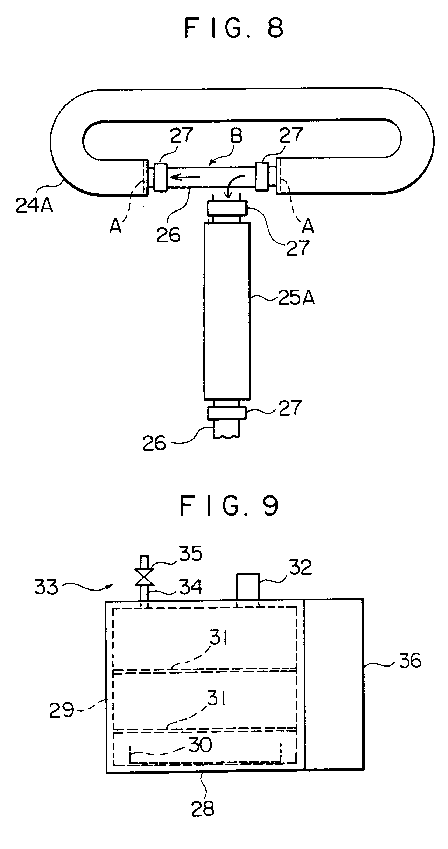

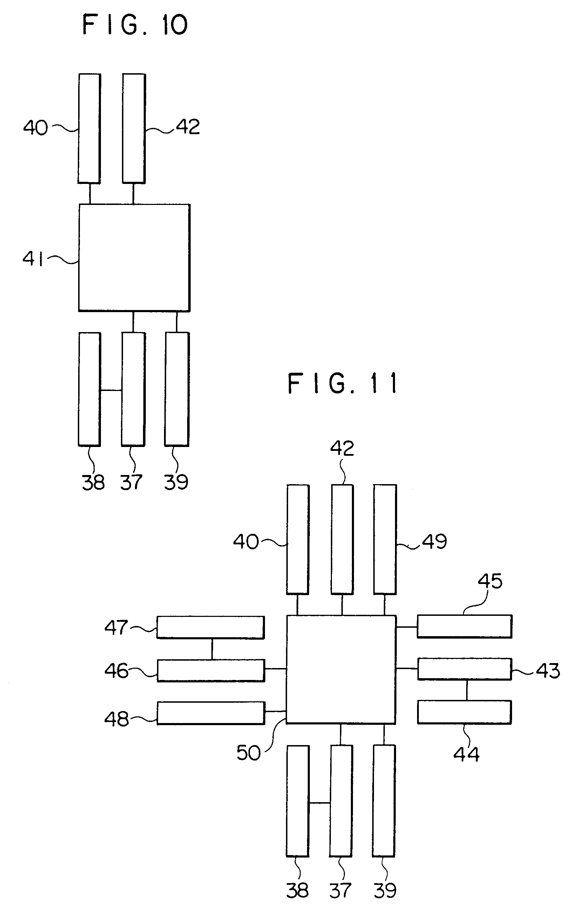

Fig.1 is the outlined cross section to explain one embodiment of the method for curing of Hume concrete, Fig.2 is the outlined cross section to explain one embodiment of curing hydraulic material. Figs.3 and 4 are respectively cross sections of curing chamber. Fig.5 is cross section of a part of a curing chamber. Fig.6 is outlined plain figure of one embodiment of curing chamber. Figs.7 and 8 are respectively plain figures of curing chamber. Fig.9 is explanative drawing for one embodiment of curing chamber. Figs.10 and 11 are respectively explanative drawings for embodiments of control system.

1, 8, 9 ... frame mold; 2, 10, 11, 12, 27 ... hydraulic material; 3, 4 ... cover for sealing; 13, 18, 24, 25, 24A, 25A, 28 ... curing chamber

## Favorable Embodiments to Work the Invention

In the following Examples embodying this invention, unless otherwise specified, portland cement was used as cement. Number of "part" represents "part" by weight. Steam-curing was conducted in a sealed curing chamber made of airtight and adiabatic material by way of steam generated from hot water supplied to the chamber. In case of humid-air-curing, curing was conducted in the said chamber wherein water is supplied instead of hot water. In both cases, curing was made in the manner that hydraulic material is not soaked in water or hot water.

## Example 1 (Claims 4 and 5)

Cement 400 part, sand 1200 part and water 250 part were mixed, thereby test pieces of pre-hardened mortar of 5cm x 5cm x 5cm were produced. 1-week-compressive-strength of each of the samples was as follows:

$163kg/cm^2$:    In case where sample was subject to air-curing at 27 - 30° C.

$180kg/cm^2$:    In case where sample was subject to air-curing at 12 - 14° C.

$289kg/cm^2$:    In case where sample was subject to steam-curing in a sealed curing chamber at environment temperature of 35° C and demolded after 6 hours, immediately thereafter soaked in hot water of 37° C for 10 minutes, thereby deficient water was replenished, then it was put in the sealed curing chamber at the condition that surface of the sample was wet. Subsequently, the sample was subject to steam-curing for 38 hours at the environment temperature of 35°C while replenishing deficient water by evaporating hot water of 37°C every hour, then it was subject to air curing at temperature of 17 - 20°C.

308kg/cm$^2$: In case where sample was subject to the curing as immediately preceding (except for last step of air-curing), after the step of steam-curing it was wrapped with plastic sheet (Trademark: Salanwrap) and cured at temperature of 17 - 20°C.

In comparison of these four samples, it was confirmed that strength being more increased, property of difficultly-water-absorbent being more improved.

## Example 2 (Claims 4 and 5)

Test pieces of 5cm x 5cm x 5cm were prepared from raw mortar obtained by mixing; cement 400 part, sand 1200 part; water 200 part; water-reducing agent (made by Kao Co., Ltd., under trademark "Mighty-150") 4 part. These samples were subject to curing respectively as follows, thereby following 1-week-compressive-strength were achieved.

205kg/cm$^2$: In case where sample was subject to air-curing at temperature of 27 - 30°C.

221kg/cm$^2$: In case where sample was subject to air-curing at 12 - 14°C.

323kg/cm$^2$: In case where sample was placed in a sealed curing chamber immediately after molding and subject to steam curing for 6 hours at environental temperature of 35°C, then the sample was demolded and immediately soaked in hot water of 37°C for 10 minutes, thereby deficient water was replenished. The sample was taken out and placed again in the curing chamber while being wet, and was subject to steam-curing at environment temperature of 35°C for 38 hours. During said curing, deficient water was replenished by evaporating with hot water of 37°C intermittedly every hour. Subsequently, the sample was subject to air-curng at temperature of 17 - 20°C. 1-week-compressive-strength was 323kg/cm$^2$.

341kg/cm$^2$: Another sample was subject to the steam-curing as immediately preceding (except for stepof air-curing), then the sample was wrapped by said Salanwrap® and cured at temperature of 17 - 20°C. 1-week-compressive-strength of said sample was 341kg/cm$^2$.

In comparison of the samples, it was confirmed strength being higher, property of difficultly-water-absorbent being more improved.

## Example 3 (Claims 2 and 5)

Pre-hardened slates (for roofing) were prepared by press-dehydrating mortar wherein cement:sand being 1:2.

One of the samples was subject to air-curing. 2-weeks-bending-strength of the cured slate was 123.2 kg/cm$^2$.

One of the pre-hardened slate was subject to air-curing for 2 days, subsequently, soaked in water for 2 hours 3 times a day for 8 days. At each soaking, the slate taken out from water was placed in a sealed curing chamber while being wet and was subject to humid-air-curing. 2-weeks-bending-strength was 157kg/cm$^2$.

One of the pre-hardened slate was subject to curing where soaking was made in the reaction liquid instead of the soaking in water (other conditions are same as in the immediately preceding example). 2-weeks-bending-strength of the slate was 165.2kg/cm$^2$.

In comparison of these sample slates, it was confirmed that bending-strength being higher, property of difficultly-water-absorbent being improved.

## Example 4 (Claims 1, 5 and 7)

Test pieces of 5cm x 5cm x 5cm were prepared from raw mortar prepared by mixing 400 part cement, 1200 part sand and 250 part aqueous solution of lime.

One of the samples was subject to air-curing at temperature of 27 - 30°C. 2-weeks-compressive-strength of the sample was 198kg/cm$^2$.

Another sample was placed in a sealed-curing chamber immediately after molding, and was subject to wet-air-cruring. The sample was taken out from the chamber and demolded next day. After demolding, the sample was soaked in water for 1 hour, then placed in the chamber while it is wet, and subject to humid-air-curing. Such operation was repeated 3 times a day for 8 days. Then, the sample was subject to air-curing. 2-weeks-compressive-strength was 257kg/cm$^2$. The sample was difficultly-water-absorbent.

### Example 5 (Claims 4, 5 and 7)

Foaming liquid was prepared by adding 1 part water-reducing agent and 1 part foaming agent (active surface type) to 100 part water. Paste was prepared by mixing 34 part of the foaming liquid and 100 part cement. 13 part of foam prepared by the foaming liquid prepared by the above-mentioned step was added to the paste. By mixing the same, paste containing foam was prepared, and molded to pieces of 5cm x 5cm x 5cm.

One of the sample was placed in a sealed curing chamber immediately after molding, and subject to steam-curing at temperature of 35°C. 6 hours later, it was demolded. The piece was soaked in hot water of 40°C for 1 hour, and thereafter subject to autoclave curing. Density of the sample was 0.69 and compressive- strength thereof was 56kg/cm$^2$.

Foaming was made by adding water and aluminum powder to appropriate amount of slaked lime and fine powder of silica. It was subject to humid-air-curing in a sealed curing chamber for 6 hours, then, soaked in hot water of 35°C for 30 minutes. It was again subject to humid-air-curing for 6 hours while vaporating hot water every 30 minutes. Subsequently, it was subject to autoclave curing. The cured sample was more difficultly-water-absorbent as compared with the case of conventional autoclave curing. Another one foamed quick lime or slaked lime and fine powder of silica by aluminum powder and subject to the curing above-mentioned was difficultly-water-absorbent. By impregnating with reaction liquid prior to, during or after autoclave curing, foamed hydraulic material of difficultly-water-absorbent and water-repellent is also obtained. Same material of same nature is also obtained by impregnating with retardedly-effective reaction liquid, such as, diluted silica and aqueous solution of lime, and subjecting to curing while suppressing evaporation of water. By such operation, voids created in foam film by air, and by evaporation gets smaller.

### Example 6 (Claim 3)

Raw mortar wherein cement:sand being 1:3 and water/cement ratio being 65% was prepared. It was subject to high-pressure-curing at 8 air pressure of inside chamber pressure for 20 hours. The mortar was free from efflorescence at the surface thereof. Another one was, after demolding, subject to steam-curing which was conducted in a sealed curing chamber to which hot water of 60°C was supplied. Then, steam-curing was made for 24 hours in humidity alternatively switched between 100% and lower than 100%. The sample was thereafter subject to air-curing. 6-days-compressive-strength was 232kg/cm$^2$. In said sample, efflorescence was controlled.

### Example 7 (Claim 2)

Sample was prepared by mixing 100 part cement, 200 part sand, 1 part reaction agent and 59 part water. After molding, it was subject to air-curing. Another piece was subject to humid-air-curing in a sealed curing chamber wherein water is provided. After 7 days from demolding, both samples were soaked in aqueous solution of lime for 1 hour, then contacted with air to react with carbon dioxide, which soaking and contacting with air was repeated 3 times. Both samples were difficultly-water-absorbent.

### Example 8 (Claims 5, 7 and 11)

100 part cement, 10 part red oxide and 38 part water where 1% reaction agent was added were mixed and molded to plate shape on a plastic plate. Immediately after molding, it was placed in a sealed chamber wherein hot water was introduced and subject to steam-curing for 16 hours at temperature of 35°C. The sample gets lustrous and glossy at the surface thereof.

Immediately after demolding, one of the samples was soaked in water for 24 hours. Material soluted-out adhered at the surface of the sample then taken out. However, such material was easily removed by wiping. When said soaking, removing of dissoluted-out material and drying were repeated, color of the sample got gradually condensed, and the sample became even water-repellent.

Further, both of the samples, one of which was subject to steam-curing for 6 hours as mentioned-above and the other which was subject to air-curing at temperature of 30°C after molding were respectively lustrous and glossy at the bottom surface thereof. After demolding, sample was subject to humid-air-curing in a sealed curing chamber by replenishing deficient water, and the other was subject to humid-air-curing in a sealed curing chamber while replenishing deficient water, according to necessity. Both of the samples were of a nature of less shrinkage and higher-strength.

Said mixture were also painted, as paint, on prehardened hydraulic material thereby layer was formed. The layer showed a nature of above-mentioned.

### Example 9 (Claim 5)

Raw mortar wherein cement:chamotte being 1:2, water/cement ratio being 60% was molded to plate shape after mixing and was subject to press-dehydration, immediately after molding, dried in a drying furnace and subject to glazing. It was burned at 900 - 1200° C. Then, after cooling slowly, it was subject to humid-air-curing in a sealed curing chamber in which hot water is located. After demolding, it was subject to humid-air-curing again while replenishing deficient water. Thus, glazed low-water-absorbent hardened material of higher-strength was obtained.

### Example 10 (Claim 11)

100 part cement, 200 part sand, 1 part reaction agent and 59 part water were mixed and molded to a plate shape. The sample was demolded after hardened. Paint prepared by adding 1% of reaction agent and appropriate amount of pigment to emulsion of synthetic resin was sprayed to the sample. No efflorescence produced at the surface of the painted hydraulic material.

### Example 11 (Claims 2 and 3)

100 part cement, 10 part red oxide and 38 part water added by 1% reaction agent were mixed thereby paste samples were obtained. While, 100 part cement, 10 part red oxide and 65 part water were mixed thereby other paste samples were obtained. These different 2 samples were respectively subject to humid-air-curing and steam-curing for the purpose of controlling first efflorescence, and after demolding, soaked in reaction liquid for 10 minutes, to the extent the liquid does not collect at the surface, and thereafter taken out. Subsequently, one of them was subject to air-curing for 1 day, the other was subject to high-pressure-curing at 5 air pressure for 10 hours. These samples were soaked in water, and then taken out. However, no second efflorescence was found. Other samples, which were soaked in water for 10 minutes instead of soaking in reaction liquid, was subject to curing under 5 air pressure. However, no second efflorescence was found in this case. Other sample was soaked in water and subsequently wiped-out, then subject to air-curing. This operation was repeated 3 times. In the obtained samples, second efflorescence was extremely less.

### Example 12 (Claim 1)

Samples of raw mortar were prepared by mixing where cement:sand being 1:3, aqueous solution of lime/cement being 70%. These samples were set in frame mold inside of which oil was coated as mold separation agent.

One of the samples was subject to air-curing and demolded next day. In this sample, surfaces contacted with frame mold were difficultly-water-absorbent. Even, the exposed surface was low-water-absorbent. One of these hardened samples was soaked in aqueous solution of lime for 2 hours then taken out. At this stage, exposed surface, as well as, surface contacted with frame mold were difficultly-water-absorbent. The second hardened sample was soaked in water for 3 hours instead of aqueous solution of lime. The surfaces were difficultly-water-absorbent as in case above-mentioned. The third hardened sample was subject to steam-curing in a sealed curing chamber where hot water is spread respectively after molding and after demolding. It was difficultly-water-absorbent even without the soaking step in aqueous solution of lime or water.

### Example 13 (Claim 6)

Raw mortar was prepared by mixing where cement:sand being 1:3, water/cement ratio being 55% (reaction agent of 1% to cement was added in the water). Immediatly after molding, the sample was subject to humid-air-curing for 24 hours for the purpose of achieving higher-strength, and after demolding it was subject to curing by means of humidifier for 2 days, thereafter subject to air-curing. 8-days-compressive strength was 263kg/cm$^2$.

### Example 14 (Claim 6)

Raw mortar prepared as Example 13 was introduced into a sealed curing chamber after molding, and subject to humid-air-curing for 8 hours, subsequently, subject to curing by humidifier for 16 hours, then, demolded. Thereafter, it was subject to curing by humidifier for 24 hours, thereafter taken out. 7-days-compressive-strength was 271kg/cm$^2$.

### Example 15 (Claims 5and 7)

Raw mortar prepared as Example 13 was subject to humid-air-curing for 24 hours. After demolding, it was soaked in water for 1 hour, thereafter it was subject to wet-curing for 23 hours. It was thereafter soaked in 3% aqueous solution of calcium stearate for 1 hour, thereafter it was subject to humid-air-curing for 23 hours. The mortar showed water-repellent nature.

In the experiments like afore-mentioned, 3% aqueous solution of natrium stearate, 3% aqueous solution of silicon (more correctly, "Poron C" $^R$ made by Shinetsu Chemical Co., Ltd.) were respectively used instead of aqueous solution of calcium stearate. Both samples likewise showed water-repellent nature.

When weak solution of emulsion of acryl synthetic resin is used instead of calcium stearate, film was formed thereby the sample was of non-water-permeability.

When microsilica and silicasol were respectively used instead of calcium stearate, the samples were difficultly-water-absorbent.

When stearate compounds are used, calcium stearate is produced, and when silica is used silicate is produced. Further, at the curing while suppressing evaporation of water, water is consumed in hydration, inclusive of the case where synthetic resin is used. Thus, less water evaporates from the surface. Accordingly, in the resultant material, less voids were created by evaporation of water and less voids were created by air. Moreover, said reaction proceeds concurrently with hydration, the resultant material is difficultly-water-absorbent or water-repellent. In addition to the afore-mentioned reasons, the water-repellent agent is blocked. Thus, in case of the material of water-repellent nature, water-repellent nature continues longer compared with the material subject to air-curing. Impregnation of stearate compounds is preferably made under pressure.

### Example 16 (Claim 3)

Colored raw mortar added with appropriate pigment was set in a plastic frame mold and subject to vibration. To that frame mold raw mortar without adding pigment was laid, and again subject to vibration, thereby molded as a whole. After such molding, the molded mortar was placed on a plywood plate, the hydraulic material was surrounded by piling wooden frame works and covered by sheet and it was subject to air-curing and demolded next day. However, steam generated from the surface of demolding and efflorescence generated thereon. The, temperature within the sheet was 50°C at upper portion and roughly 40°C at the lower portion. When demolded in a day later, no efflorescence generated. At this demolding, temperature in the sheet was 28°C, namely, substantially same as open air.

### Example 17 (Claims 5 and 6)

Raw mortar prepared as Example 13 was, after molding, subject to steam-curing for 6 hours at 35°C. After demolding, it was soaked in hot water for 30 minutes at 38°C, thereafter without interruption, it was subject to steam-curing at temperature of 35°C for 38 hours. 6-days-compressive-strength was 277kg/cm$^2$. When other same sample was subject to steam-curing approximately at 60°C or more, temperature at the hydraulic material gets higher than environmental temperature in the chamber, calcium carbonate produces or cement gel crystallizes while evaporation of water proceeds. So, even though the hydraulic material is subject to steam-curing again after demolding, strength did not increase. While, when it was subject to steam-curing or humid-air-curing, while evaporation of water is suppressed, respectively at temperature of 30 - 50°C, then less air is replaced and less calcium carbonate produces. Accordingly, even though steam-curing was conducted after demolding, temperature at the hydraulic material does not get so higher, less water evaporates and cement gel produces, thus strength increased. The hydraulic material was soaked in water, because replenishment of deficient water is necessary due to evaporation of water during the curing after demolding. Except for curing at high temperature, steam-curing conducted after air-curing and demolding thereafter was effective.

14

**Example 18 (Claim 4)**

Raw mortar was prepared by mixing, where cement:sand being 1:3, water/cement ratio being 62%. 8 hours later from molding, this sample was subject to curing wherein hot water of 35°C was vaporized for 40 hours by 10 minutes interruption, so that surface of the mortar is continuously wet. 7-days-compressive-strength of the resultant material was 252kg/cm$^2$.

**Example 19 (Claim 12)**

3000 part water was added to 100 part cement. After stirring, operation was continued for 6 hours to precipitate cement and take-out liquid wherein efflorescence ingredient dissolves, subsequently washed by water. Then 1 part water-reducing agent and appropriate amount of pigment were added, thereby slurry was made. Painting was made with this slurry at the surface of raw slate for roofing immediately after moding, and the slate was subject to curing. No efflorescence produced at the slate. By the way, slurry prepared by being treated with sugar water or acid and thereafter subjecting to washing by water was useful instead of preparation method of aforementioned. Further, addition of synthetic resin emulsion was useful for controlling generation of efflorescence.

Following Table 1 is presented to show experimental data for further details of the effect of this invention. In the Table, "No." indicate number of each example, "C:S" means cement:sand ratio, "W/C" means ratio of water(or aqueous solution of lime)/cement. "humid-air-curing" means curing wherein humid-air-curing was conducted for 4 days in a sealed curing chamber and after demolding the sample was soaked in water twice a day each for 1 hour for the purpose of getting higher-strength, then the sample of subject to air-curing. "Compressive strength" is represented by unit of kg/cm$^2$, and "Material age" is represented by day. As shown by the Table, although test pieces prepared by the same conditions, samples subject to the humid-air-curing have larger density and higher compressive-strength. No energy was added during the curing.

Table 1

| No. | Additive agent | C:S | W/C | Compressive strength | Material age | Density | Curing | Water-absorbency |
|-----|-----|-----|-----|-----|-----|-----|-----|-----|
| 20A | Non | 1:3 | 50% | 163.74 | 10 | 1.88 | air curing | water-absorbent |
| 20B | | | | 234.04 | 10 | 2.00 | humid-air curing | low water absorbent |
| 21A | reaction agent | 1:3 | 41% | 195.44 | 8 | 1.99 | air curing | low water absorbent |
| 21B | | | | 329.72 | 8 | 2.03 | humid-air curing | difficultly water-absorbent |
| 22A | Non | 1:3 | 52% | 111.75 | 8 | 1.89 | air curing | difficultly water-absorbent |
| 22B | | | | 195.33 | 8 | 1.97 | humid-air curing | difficultly water-absorbent |

(aqueous solution of lime was used instead f water)

| No. | Additive agent | C:S | W/C | Compressive strength | Material age | Density | Curing | Water-absorbency |
|-----|-----|-----|-----|-----|-----|-----|-----|-----|
| 23A | reaction agent | 1:3 | 45% | 215.20 | 8 | 1.96 | air curing | difficultly water-absorbent |
| 23B | | | | 232.15 | 8 | 2.01 | humid-air curing | difficultly water-absorbent |

(aqueous solution of lime was used instead f water)

| No. | Additive agent | C:S | W/C | Compressive strength | Material age | Density | Curing | Water-absorbency |
|-----|-----|-----|-----|-----|-----|-----|-----|-----|
| 24A | foaming agent | 1:0 | 55% | 32.17 | 17 | 0.82 | air curing | low water absorbent |
| 24B | | | | 40.77 | 17 | 0.84 | humid-air curing | difficulty water-absorbent |

In certain case where aqueous solution of lime is used instead of water, 8-days-stength was rather low, say, 111.75kg/cm$^2$. However, 15-days-strength increased substantially double, say 198kg/cm$^2$. The material was of a nature of difficultly-water-absorbent, and of high-alkali and durable. By the way, when hydraulic material is prepared by adding reaction agent to aqueous solution of lime, the resultant material is difficultly-water-absorbent and of higher-strength. Further, various experiments show that 1-week-compressive-strength increased (1) by 21% (in 10 days-compressive-strength) in case of steam-curing as compared with the case of air-curing and (2) by 37% in case where a sample was subject to curing in water and (3) by 42% in case where a sample was, after molding subject to humid-air-curing conducted in a sealed curing chamber in which water is supplied, and after demolding, subject to humid-air-curing for 3 days while replenishing deficient water, namely, humid-air-curing was conducted for 4 days in total. In inventors' opinion, the fact that increase of strength was higher than in case of water-curing is due to non-consumption of efflorescence ingredient by dissolving-out and contribution by calcium carbonate which is produced by reacting efflorescence in gredient with carbon dioxide. Further, in case where humid-air-curing was conducted by using reaction agent of water-reducing type as a reaction agent, although mixing ratio of cement and aggregates is same, strength increased by 101% at same slump. This is due to multiplied effect of the water-reducing effect and curing effect.

Further, when high-strength is desired, repeated replenishment of deficient water is preferable to the extent that efflorescence ingredient does not dissolve out. When controlling of efflorescence is desired, repeating of said operation is preferable to the extent that efflorescence ingredient does not move toward the surface. When difficultly-water-absorbent material is desired, sufficient replenishment of deficient water is preferable.

Further details of curing are illustrated referring to the following drawings. Fig.1 shows one example of curing of Hume concrete, wherein 1 is frame mold, 2 is hydraulic material molded in the frame mold 1, 3 and 4 are sealing covers fixed to the frame mold 1 by way of bolt through packing or the like. 5 is pressure tube with valve 6 installed at the sealing cover 4. After centrifugal molding. The sealing covers 4 and 5 are fixed. Air is introduced under pressure by means of compressor or the like from pressure tube 5. Curing is conducted while keeping empty portion 7 at high pressure thereby curing proceeds while evaporation of water is suppressed. Of course, high temperature and high pressure curing can be conducted by heating from outside or by providing heated air under pressure. Further, when hydraulic material has hardened to the degree that it does not break loose, deficient water may be replenished by means of humidifier, or by providing with steam of high pressure by means of boiler, or by vaporizing water or hot water (Claims 3, 5).

Fig.2 shows the situation where hydraulic material 10 is set into the frame mold built by bottom frame mold 8 and side frame mold 9, leaving empty portion 7 (space). Sealing cover 4 equipped with pressure tube 5 with valve 6 is fixed in the frame mold. Air is provided by pressure from pressure tube 5, thereby empty portion 7 is maintained at high pressure, thereby hydraulic material is subject to curing while suppressing evaporation of water from the hydraulic material. By this chamber, high-temperature and high-pressure curing and curing while replenishing deficient water may be conducted (Claims 3, 5).

Hydraulic material may be set in frame mold and sealed by sealing cover leaving space within the frame mold, or hydraulic material may be set on the ground and the like, and sealed by placing airtight material and the like leaving space thereupon. Hydraulic material is cured while replenishing deficient water intermittedly or continuously, thereby evaporation of water from the hydraulic material is suppressed. Curing may also be conducted at high pressure and, at need, while replenishing deficient water intermittedly or continuously. Then, hydraulic material of higher-strength and/or difficultly-water-absorbent may be obtained (Claims 3, 5).

Afore-mentioned curing may be conducted by providing with water-absorbent material inside of the frame mold. In this case, above-mentioned water-absorbent material may absorb water or hot water by providing with water or hot water and sealing the hydraulic water by means of water or hot water collected on the hydraulic material or the sealing cover. This step may be made once or more (Claim 5). Sealed-curing may be conducted by replenishing deficient water with or without the water-absorbent material (Claim 5).

As the said hydraulic material, hydraulic material produced by adding reaction agent or not adding the same; or material curred by the lime-water-method may be used. For sealing the exposed surface, resin may be coated thereon. Water may be replenished through gap created by loosing between the frame molds.

Fig.3 shows another sample of curing method of hydraulic material. 11 is the hydraulic material under curing, 12 is the hydraulic material after the curing, 13 is a sealed curing chamber covered by airtight or airtight and adiabatic material, which can freely expand and contract at the direction of the moving. As shown in Fig.5, the curing chamber is composed of piping frame 15 capable of freely running on the rail 14 by way of wheels 23 and airtight or airtight and adiabatic sheet 17 fixed outside of the piping frame and sinks in water at the lower end thereof. At the right and left sides of the chamber, shutters capable of freely opening and closing are provided. When the chamber extends or contracts or moves, the shutters open. When the curing is conducted, the shutters close.

Said curing chamber may be a type of non-extending/contracting but of moving style chamber 18, as shown in Fig.4. Either of these types are appropriately selected in view of the area of stockyard and number of days used for curing. Further, inside of the chamber, there is concrete vessel 19 for storing water, and sand or gravel 20 is placed at the bottom of the vessel 19 to prevent the hydraulic material from being wet or to make easy to walk. Suitable amount of sand and gravel increases the surface area of water-evaporation. Hygroscopic material, such as, fiber or porous material.may be used instead of sand and gravel. Said curing chamber may be used for the liquid-replenishing method and steam-curing-after-demolding-method etc.(Claims 5, 6).

Fig.6 shows a case where humidity adjustment chambers 22 are provided at the entrance and exit of the curing chamber 21. Water or hot water is provided at the floor of the curing chamber 21. Inside the chamber, high humidity and/or high temperature are maintained, and at need, by further providing with steam and/or heated air.

Shutters are provided between the humidity adjusting chamber 22 and curing chamber 21 and adjusting chamber 22 and outside thereof. Entrance and exit of hydraulic aterial and operating person are made through the humidity adjustment chamber. Namely, when hydraulic material is transported into the curing chamber, the material is first transported to the humidity adjusting chamber. Then, humidity and temperature in the humidity adjustment chamber are adjusted so that humidity and temperature therein are substantially same as those in the curing chamber.

When the hydraulic material is carried out from the curing chamber, operation is made vice versa. Entrance and exit of operating person is made likewise. This chamber is useful especially, for the liquid-replenishing-curing and steam-curing-after-demolding-method (Claims 5, 6).

Fig.7 shows curing chambers of sealing type, 24 and 25 covered by airtight and airtight and adiabatic material and equipped with shutter A. 26 is rail, 27 is the hydraulic material loaded on a transportation device freely running on the rail. The hydraulic material 27 is carried in or taken out at certain lot, for example, concrete blocks prepared in ten minutes, or roofing slates for each rack. At the carrying-in or taking-out, the shutter A opens, while at other step, the shutter A closes. Inside the curing chambers 24 and 25 are always kept at high humidity by means of evaporation of water or hot water placed at the floor thereof. The hydraulic material cured by the curing chamber 24 may be demolded at the demolding site B and carried and cured in the chamber 25. Hydraulic material subject to curing by this curing system may be the material after molding or after demolding.

Further, as shown in Fig.8, the chamber 24A for curing after molding may be constructed as a rotation type, and the chamber 25A for curing after demolding may be located adjacent to the demolding site B. Moreover, at the demolding site, equipment for replenishing water or reaction liquid may be located. This curing system is useful especially for the liquid-replenishing method, evaporation-preventing-method, or steam-curing-after-demolding-method (Claim 3, 5, 6).

Fig.9 shows one sample of the curing chambers for experiment. Wherein, 28 is the curing chamber covered by airtight material 29, 30 is the water vessel located at the bottom thereof, and in the water vessel 30, heater is equipped therein in a manner it sinks in the water so that steam generator is formed. 31 is the shelf with many holes located in the curing chamber 28 (loader of the hydraulic material), 32 is a fan located at the upper portion of the curing chamber 28, by which air within the curing chamber 28 is agitated or rotated so that temperature and humidity within the curing chamber are uninformalized. 33 is the dehumidifier constructed by fixing valve 35 to air excluder 34. Fan or compressor is fixed at the air excluder 34, thereby air exclusion is made rapidly so that humidity or pressure descends within the chamber, or thereby outside air is introduced so that pressure is elevated. In this case, it is useful for multi-purpose device functioning for dehumidification, pressure-exchange and temperature descending. 36 is chamber for instruments located adjacent to the curing chamber 28.

Fig.10 shows a sample of system diagram for controlling temperature in the curing chamber. Wherein, 37 is a temperature detector located in the curing chamber 28, 38 is temperature indicator indicating the temperature detected by the temperature detector 37, 39 is temperature fixing device by which a desired temperature is fixed. 40 is steam generator, 41 is temperature controller, which compares the temperature detected by the temperature detector 37 with the temperature fixed at the temperature fixing device 39 thereby adjust temperature at the desired temperature. 42 is time controller instructing time to the temperature controller 41.

Water is provided in the water vessel 30 located in the curing chamber 28, hydraulic material is loaded on the shelf 31 and the shutter is closed. Desired temperature and curing time are respectively fixed at the temperature fixing device 39 and time controller 42. Temperature controller 41 compares the detected temperature provided by the temperature detector 37 and the temperature fixed at the temperature fixing device 39. Temperature is usually fixed by higher than normal temperature. If the detected temperature is lower than the fixed temperature, temperature controller 41 sends signal to the steam generator 40 thereby operates the same. If the detected temperature reaches the fixed temperature, the operation of the steam generator 40 stops. When the steam generator stops, the temperature begins to descend. For example, when the temperature descends by $1°C$, the temperature controller 41 sends signal to the steam generator 40, thereby operates the same. After reaching the fixed temperature, the operation stops. If the operation of this kind is repeated, elevation and descending of temperature are repeated within said temperature zone, thus, fixed temperature is substantially maintained. To return to the normal temperature, operation of the steam generator 40 discontinues.

In said curing, if the curing chamber is closed while placing water therein, 100% humidity is maintained in the chamber by evaporation of water, notwithstanding temperature. Temperature being the higher, the amount of the water being larger in environment of the chamber. Thus, curing is conducted while keeping water at the desired level. Elevation of temperature is conducted by steam generator 40 and descending of temperature is made by stopping operation thereof. Thus, if fixed temperature and fixed time are set appropriately, curing can be made at desired tendency of temperature.

Fig.11 shows an example of system diagram of temperature control, wherein temperature controlling system and pressure controlling systems are added to the above system diagram. 43 is humidity detector located in the curing chamber 28. 44 is humidity indicator indicating the humidity detected by humidity detector 43, 45 is humidity fixing device fixing the desired humidity, 46 is pressure detector located in the curing chamber 28, 47 is pressure indicator indicating pressure detected by pressure detector 46, 48 is pressure fixing device fixing the desired pressure, 49 is dehumidifier which descends humidity in the chamber 28, 50 is temperature and humidity controller wherein the detected values respectively from the temperature indicator 37, humidity indicator 43 and pressure indicator 46; and the fixed values respectively at the temperature fixing device 39, humidity fixing device 45 and pressure fixing device 48 are compared, and signals are sent respectively to steam generator 40, dehumidifier 49 and operates the same, thereby controls temperature, humidity and pressure. Dehumidifier 49 is built by installing a valve to the air excluder connecting with the curing chamber 28. By opening and shutting the valve, pressure, temperature and humidity in the chamber may be changed.

Controlling of temperature, humidity and temperature by means of the apparatus of said diagram is conducted by operating and stopping the steam generator 40 and opening and shutting the dehumidifier 49, which controlling is made in the manner shown by the operation of temperature controller. Further, pressure may be increased in the curing chamber by way of the compressor fixed to the dehumidifier 49. Dehumidification may also by achieved by way of using a heat pump or cooler to realize liquidation. The temperature detectors may be those detecting temperature in the water vessel and/or environment in the chamber. Humidity detector, humidity indicator, humidity fixing device, pressure detector, pressure indicator and pressure fixing device are not always required. Curing alternatively at 100% humidity and below may be conducted simply by opening and shutting the valve of the dehumidifier at certain interval. If a heat pump or cooler is used with the valve installed at the air excluder, over elevation of pressure may be prevented.

In above-described curing chamber, one or more of selected from among humidifier, sprinkler, vaporizer, dehumidifier, heater installed at the ceiling and at the wall (hereinafter mentioned) may be installed instead of the dehumidifier. Further, in the curing chamber, doors automatically opens and shuts at a fixed time interval may be useful. Detectors, indicator, fixing device and cntroller for temperature, humidity and pressure in the curing chamber respectively form the controllers for temperature, humidity and pressure. Various curing method above-mentioned may be conducted automatically (Claim 9).

Said temperature controlling curing chamber may be curing chambers of running type or extension/contraction type. In this case, it is not always necessary to move steam generator and loader for the hydraulic material. Curing chambers shown in Fig.6 - 8 may be the temperature controlling curing chamber above-mentioned (Claim 9).

Heate generator installed at the ceiling and/or wall may be used in a ordinary steam curing chamber of sealed type. In this case, the ceiling or wall itself may have function of heat generator. The heat generator is preferably of sheet shape. By using such heat generator, high temperature zone is formed along with the ceiling or wall of the curing chamber, thereby dewing is avoided, accordingly, evaporation of water from the hydraulic material is avoided indirectly (Claim 8).

Curing may also be conducted in a curing chamber wherein a water vessel is connected to other water vessel by means of pipe at which valve is installed, thereby water may move alternatively from one vessel to other and vice versa. In this case, the hydraulic material is placed in a water vessel, water is provided therein and impregnated to the hydraulic material, then water is excluded therefrom and the shutter is closed, thereby curing is conducted while suppressing evaporation of water. By opening and closing the shutter, the curing at alternatively 100% humidity and below may also be conducted (Claim 10).

Curing may be conducted in a curing chamber installed with endless belt at the portion of the ceiling, whereby dew formed at the endless belt may be removed by squeezing-out at the wall portion of the chamber or by wind-drying at the outside of the chamber. By this endless belt, dew formed at the ceiling does not drop on the hydraulic material and does not deteriorate the same. If openings are provided at the endless belt, the curing chamber opens at a certain time interval by way of rotation of the endless belt. Thus, curing is conducted at alternatively 100% humidity and below. This curing chamber is useful especially for the evaporation-of-water-suppressing method, liquid-replenishing-method and after-demolding-curing (Claims 4, 5, 6).

This invention is worked in the following modes.

(1) Hydraulic material subject to the curing may be the hydraulic material prepared by adding reaction agent or not, or may be the hydraulic material prepared by using aqueous solution of lime.

(2) Curing may be conducted in the environment of air or gas after combustion, such as, carbon dioxide and at normal pressure, high pressure or by autoclave curing. Instead of humid-air-curing or steam-curing, other mode of curing may be operated while suppressing evaporation of water.

(3) After molding of Hume concrete to tube shape, the first curing may be conducted by coating emulsion of synthetic resin type thereby forming film at inside of the tube, and after demolding, humid-air-curing or steam-curing may be conducted by replenishing deficient water, or sealed curing may be conducted by coating resin at the surface.

(4) Raw material of the hydraulic material is not limited to cement (including various cement available in the market, such as, slag cement), and reaction is not limited to hydration. For example, hydraulic material prepared by adding fine powder of silica and water to portland cement or further adding foaming agent thereto thereby forming material or material containing foam may be subject to autoclave curing. Moreover, mixture of lime with pozzolan or additionally cement may be used. Aluminum powder may be used as foam agent in the manner as in case of conventional ALC, to foam the material. Moreover, at the foaming, reaction agent may be added. Foaming may be conducted by reaction type foam agent, foam agent with reaction agent or foam agent of active surface type with foam agent of gasification type. At autoclave curing, including ALC, evaporation-suppressing-method or liquid-replenishing-method and the like may be conducted prior to, during or after the autoclave curing. Same manner is useful in the preparation of plate of calcium silicate.

(5) As the reaction agent and reaction liquid, any material reactive with cement or products thereof in the presence of water is useful. More precisely, followings are useful: acids, such as, manganese acid, permagnese acid, orthophosphoric acid, metaphosophoric acid, phosphorous acid, silicic acid, sulfuric acid, nitric acid, hydrochloric acid, carboxylic acid (such as, tartronic acid, malic acid, tartaric acid, gluconic acid, gulonic acid, citric acid and ascorbic acid); alkalis, such as, sodium bicarbonate, ammonium hydroxide, water glass; water-reducing agents available in the market, such as, Cataloid (brand) (made by Shokubai Kasei Co., Ltd.), Mighty-150 (brand) (made by Kao Co., Ltd.), Mighty-2000 (brand) and Sunflow-MA (brand) (made by Sanyo Kokusaku Pulp Co., Ltd.); thickeners, such as, Metrose (brand), High-Metrose (brand) (made by Shinetsu Chemical Co., Ltd.); various kind of silicon and micro silica, various kind of AE agent, fluidation agent, efflorescence control agent, expanding agent, surface-active agent, foam agent, water-repellency donor, such as, calcium stearate or mixture of these material. Materials reactive with cement compounds or produced therefrom under the presence of water may sserve for this purpose. Materials more than two of which reacts thereby reduces voids created by evaporation of water are also useful. As the reaction liquid referred to in the above-mentioned Examples, appropriate amount of water-reducing agent, acid, alkali, those prepared by adding acid and/or alkali to water-reducing agent or surface-active agent are useful. However, reaction liquid is not limited to the said materials. For example, followings are useful for reaction agent and reaction liquid:

(A) In case of strong acid, such as, sulfuric acid, hydrochloric acid and nitric acid, diluted solution of 1/1 million - 1/10 million is useful.

(B) In case of carboxylic acid, such as, tartronic acid, malic acid, tartaric acid, gluconic acid, gulonic acid, citric acid, ascorbic acid, diluted liquid or solution of approximately 1/200 - 1/500,000 is useful.

(C) In case of alkali, such as, sodium bicarbonate, ammonium hydroxide and water glass, diluted solution or solution of approximately 1/100 - 1/200,000 is useful.

(D) In case of silica, such as, silicasol, silicon microsilica; thickener, such as, Metrose (brand); water-reducing agent, water-repellent agent, other AE agent, fluidation agent and surface-active agent, diluted solution of approximately 3 - 1/100 is useful.

(E) Mixture of two or more of the above-mentioned agents is also useful.

When used as the reaction agent, approximately 0.3 - 100% to the cement is preferable. When used as the reaction liquid, it may be used as it is.

(6) In the lime-water-method, at the preparation of aqueous solution of lime by adding slaked lime, quick lime or cement to water and making hydraulic material by this aqueous solution, cement wherein efflorescence ingredient dissolved out may be used together with said material. Ordinarily, cement holds hydraulic nature at this stage. In autoclave curing, slaked lime is more effective, if silica is contained therein.

Difficultly-water-absorbent hydraulic material is obtained by setting hydraulic material in frame mold, impregnating aqueous solution of lime by blasting aqueous solution of lime to the upper exposed surface and conducting sealed curing. Thus, after demolding, low-water-absorbent nature is improved by impregnating deficient water or aqueous solution of lime at the surface of demolding. When hydraulic material prepared by lime-water-method is set in the frame mold, these operations are simplified.

(7) When water, reaction liquid, synthetic resin emulsion or aqueous solution of lime is impregnated to the hydraulic material, impregnation under pressure may be conducted. When subsequent curing is made while suppressing evaporation of water, if high-pressure-curing or autoclave curing is conducted, less holes are created by passing evaporation, less voids are created by evaporation of water, less voids are created by air, this provides effective method for getting hydraulic material of higher-strength.

(8) Hydraulic material is not limited to mortar. In case of concrete, same tendency as the case of mortar is obtained.

(9) For replenishing deficient water, using water or hot water of substantially same temperature as hydraulic material is preferable. In case of curing by providing hot water into a vessel in a sealed chamber, hot water is replenished to the hydraulic material by way of pumping-up and vaporing.

(10) Exposed portion of the hydraulic material set in a frame mold is sealed by thin plastic sheet, such as, Salanwrap (brand), and curing may be conducted under air-curing or curing while suppressing evaporation of water. In this method, no efflorescence generates. Curing may also be conducted while suppressing evaporation of water by sealing the hardened hydraulic material, after deficient water is impregnated. Above-mentioned sheet adheres well, and hydraulic material of higher-strength is obtained.

(11) In lime-water-method, if aqueous solution of slag cement is used, hydration of slag is spurred, thus, higher-strength is achieved at the initial stage even in case of air-curing. Slaked lime and quick lime may be additionally mixed.

(12) To obtain hydraulic material of efflorescence controlled and high-strength, pre-hardened hydraulic material is preferably placed in the curing chamber as soon as possible after molding. Further, even though humidity is 100%, curing at 30 - 50°C is preferable. If curing is subsequently conducted at alternatively 100% humidity and below 100%, secondary efflorescence may also be controlled.

(13) In case of Example 9, fire-proof aggregate, such as, volcanic ashes may be used, as aggregate in place of chamotte. Further, if hydration proceeds less at drying stage, the hydraulic material may be burned at temperature lower than 1200°C, for example, 900°C. If hydration proceeds, it may be burned at temperature higher than 1200°C, for example, 1450°C.

(14) If appropriate, thing or method used in Example 1 may be used in other Examples.

**Effect of Invention**

This invention achieves hydraulic material of higher-strength by controlling water and efflorescence ingredient, and consequently, by controlling reaction of efflorescence ingredient with carbon dioxide or reaction agent or reaction liquid. By lime-water-method, hydraulic material of difficultly-water-absorbent, water-repellent or low-water-absorbent is obtained. It is especially suitable for field works where only air-curing is usable. In impregnation method, second efflorescence can be controlled by simple steps. This method is also useful for getting hydraulic material of difficultly-water-absorbent, water-repellent and higher-strength. In impregnation method, second efflorescence can be controlled, and hydraulic material of extremely low- water-absorbent and higher-strength may be obtained. In evaporation-preventing-method, first and second efflorescence can be controlled and higher-strength may be realized. In sooner-curing-method, hydraulic material of higher-strength and low-water-absorbent is obtained. In liquid-replenishing-method, hydraulic material of water-repellent, difficultly-water-absorbent and/or high-strength can be obtained. In steam-curing-after-demolding-method, alkali is preserved in the resultant material, thus does not deteriorate reinforced steel and durable steel reinforced concrete is obtained. In dewing-prevention-curing-chamber, improved curing can be conducted wherein evaporation of water is less and dropping of formed dew is prevented. In temperature-controlling-curing-chamber, various kind of curing can be conducted under automatic control. In water-vessel-curing-chamber, curing can be made without transferring the hydraulic while replenishing deficient water and suppressing evaporation of water. By painting paint of reaction type of this invention, efflorescence does not generat on the coated surface of the hydraulic material. Paint of slurry type of this invention is useful and most cheap paint.

In view of the above-mentioned effects, this invention is useful for construction of various kind of site construction, such as, road, dam (sealed curing is conducted while replenishing deficient water by means of providing many water-passable holes in the hydraulic material and providing water-absorbent material at the surface), building, pool, water vessel and painted mortar (after painting, covered by sheets and if necessary, deficient water is replenished. Moreover, the material is painted with mortar prepared by lime-water-method), in addition to various kind of secondary concrete products. It is also useful in construction of atomic furnace and in burying wastes from atomic furnace. These non-water-repellent but difficultly-water-absorbent hydraulic material can be coated by paint. Thus, the material can be protected double. Coloring may be made thereon. Impregnation-method and liquid-replenishing method are also useful for repairing works of old concrete or mortar. Further, if mixed retardedly-effective reaction agents are impregnated to water-absorbent materials, such as, bricks, difficultly-water-absorbent materials are obtained. By the way, when mixed reaction agents of such kind are impregnated, curing while suppressing evaporation of water is not always necessary. In hydraulic material lustrous, at the surface or contact surface with frame mold, efflorescence can be controlled by impregnating with oil or reaction agent. Paint of emulsion type is also useful for anticorrosive paint for metal.

**Claims**

1. Method for producing hydraulic material characterized in that <u>pre-hardened</u> <u>hydraulic</u> <u>material</u> is

produced by using aqueous solution of calcium hydroxide or aqueous solution of lime, such as, efflorescence ingredient, instead of water, and at need, reaction agent reactable with efflorescence ingredient is further added to such pre-hardened hydraulic material, and subsequently the hydraulic material is molded and subject to curing.

2. Method for curing hydraulic material characterized in that hardened hydraulic material prepared by adding reaction agent or not adding reaction agent, or hardened hydraulic material prepared by the method of claim 1, is impregnated or impregnated under pressure with one or more of selected from among reaction agent reactive with efflorescence ingredient, aqueous solution of lime and emulsion of synthetic resin type added with reaction agent; once or more, in the environment of air or carbon dioxide at normal pressure or high pressure to the extent that the liquid does not collect at the surface of the hydraulic material and inside efflorescence ingredient does not move toward the surface, thereby inside efflorescence ingredient and/or the impregnated aqueous solution of lime reacts with carbon dioxide in air which mixed with the hydraulic material during mixing step, carbon dioxide or carbon dioxide in air which comes into the voids where water has evaporated, reaction agent or reaction liquid, and at need, film of resin is formed at the surface of the hydraulic material, thereby obtain hydraulic material of second-efflorescence-controlled, of difficultly-water-absorbent and/or water-repellent nature or of higher-strength.

3. Method for curing hydraulic material characterized in that hardened or pre-hardened hydraulic material prepared by adding reaction agent or not adding reaction agent, or hardened or pre-hardened hydraulic material prepared by the method of claim 1 is (a) subject to high-pressure curing while suppressing evaporation of water so that inside efflorescence ingredient does not move toward the surface of the hydraulic material, or (b) subject to normal-pressure curing or high-pressure curing under the humidity alternatively switched between 100% and lower than 100% so that dewing does not generate efflorescence, or (c) subject to high temperature curing conducted in a sealed chamber made of airtight and adiabatic material using hydration heat and said sealed chamber is released after the temperature of the hydraulic material descends to substantially normal temperature; respectively in environment of air or carbon-dioxide thereby control movement of efflorescence ingredient toward the surface, thus promote hydration, and obtain hydraulic material of first-efflorescence-controlled and/or second-efflorescence-controlled and of higher-strength.

4. Method for curing hydraulic material characterized in that pre-hardened hydraulic material is cured (a) in a sealed-curing or steam-curing while suppressing evaporation of water from the hydraulic material or (b) by air-curing; and immediately after the hydraulic material does not break loose in spite of adding water or hot water thereto, (i) deficient water is collected on the surface of the hydraulic material or (ii) deficient water is replenished to the hydraulic material intermittently or continuously, or (iii) water is supplied into voids created by evaporation of water by soaking the hydraulic material in water or hot water; respectively while suppressing evaporation of water from the hydraulic material by water at the surface, and, at need, curing is further continuously made by sealed-curing or steam-curing without replenishing deficient water while suppressing evaporation of water from the hydraulic material.

5. Method for curing hydraulic material characterized in that where hardened hydraulic material produced by adding or not adding reaction agent, or hardened hydraulic material produced by the method of claim 1 is, cured by curing conducted while suppressing evaporation of water, such as, sealed-curing, curing in a chamber where water or hot water is replenished, steam-curing conducted by supplying steam into a sealed chamber, high pressure curing, autoclave curing; the hydraulic material is replenished, prior to or during the curing, and after molding and/or demolding, with water, hot water, reaction agent, emulsion of synthetic resin type, emulsion of synthetic resin type added with reaction agent or aqueous solution of lime; as deficient water or water to dissolve efflorescence ingredient, by way of water-soaking, or continuous or intermittent humidification by humidifier or vaporizer; thus, hydraulic material of higher-strength, difficultly-water-absorbent or efflorescence controlled nature is obtained.

6. Method for curing hydraulic material characterized in that pre-hardened hydraulic material of after molding is cured while suppressing evaporation of water and/or at approximately lower than 50°C in the manner reaction of efflorescence ingredient with carbon dioxide and/or crystallization of cement gel do not proceed, and after molding and/or demolding, steam-curing is conducted, thus, hydraulic material of higher-strength is obtained.

7. Hardened hydraulic material characterized in that fine and difficultly-water-absorbent film and/or water-repellent film is, as a whole, formed at the outer layer thereof, which film is mainly composed of calcium carbonate compounds, calcium stearic or calcium silicate, and at which film voids created by evaporation of water are blocked or such voids are extremely less in number.

8. Curing chamber of hydraulic material characterized in that heat generator is installed at the ceiling or wall of the chamber.

9. Curing chamber for hydraulic material characterized in that it is equipped with steam generator, such as, water vessel equipped with heat generator, temperature detector detecting temperature of water or hot water in the steam generator and/or space within the chamber, temperature fixing device fixing desired temperature and temperature controlling unit equipped with temperature controller which controls temperature within the chamber at desired level on the basis of the detected temperature detected by said temperature detector and the temperature fixed by said temperature fixing device and one or more of selected from among humidifier, sprinkler, vaporizer, dehumidifier installed therein, and heat generator installed at the ceiling thereof and heat generator installed at the wall thereof, and at need, apparatus for controlling humidity and apparatus for controlling pressure.

10. Curing chamber for hydraulic material characterized in that one water-soaking-vessel is connected with other water-soaking-vessel or water-supply-vessel so that water or hot water can flow alternatively from one vessel to other and vice versa.

11. Coating characterized in that it is prepared by adding reaction agent and, at need, coloring material, to slurry of cement or emulsion of synthetic resin type.

12. Coating characterized in that paste is prepared by using cement which contains substantially no efflorescence ingredient, such as, cement where efflorescence ingredient is removed by washing with water, or cement washed by water after reacting with sugar water or acid, and added with coloring material thereto and, at need, reaction agent or emulsion of synthetic resin.

F I G. 1

F I G. 2

F I G. 3

F I G. 4

## F I G. 5

## F I G. 6

## F I G. 7

FIG. 8

FIG. 9

F I G. 1O

F I G. 11

# INTERNATIONAL SEARCH REPORT

International Application No  PCT/JP90/00355

**I. CLASSIFICATION OF SUBJECT MATTER** (if several classification symbols apply, indicate all) [6]

According to International Patent Classification (IPC) or to both National Classification and IPC

Int. Cl[5]
C04B28/02, C04B40/00, C04B41/61

**II. FIELDS SEARCHED**

Minimum Documentation Searched [7]

| Classification System | Classification Symbols |
|---|---|
| IPC | C04B28/02, C04B40/02, C04B40/04, C04B41/63 |

Documentation Searched other than Minimum Documentation
to the Extent that such Documents are Included in the Fields Searched [8]

| | | |
|---|---|---|
| Jitsuyo Shinan Koho | | 1916 – 1990 |
| Kokai Jitsuyo Shinan Koho | | 1971 – 1990 |

**III. DOCUMENTS CONSIDERED TO BE RELEVANT** [9]

| Category * | Citation of Document, [11] with indication, where appropriate, of the relevant passages [12] | Relevant to Claim No. [13] |
|---|---|---|
| A | JP, A, 61-86483 (Matsushita Electric Works, Ltd.), 1 May 1986 (01. 05. 86)  (Family: none) | 1 |
| A | JP, A, 60-5085 (Hazama-Gumi, Ltd.), 11 January 1985 (11. 01. 85), (Family: none) | 1 |
| Y | JP, A, 62-191483 (Idemitsu Oil Co., Ltd.), 21 August 1987 (21. 08. 87), (Family: none) | 1 |
| Y | JP, A, 62-212277 (Kao Corporation), 18 September 1987 (18. 09. 87), (Family: none) | 3 |
| X | JP, B2, 62-14517 (Matsushita Electric Works, Ltd.), 2 April 1987 (02. 04. 87), (Family: none) | 4 |
| X | JP, A, 57-71883 (S.E.C.T.R.A.  S.A.) 4 May, 1982 (04. 05. 82) | 4 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| June 30, 1990 (30. 06. 90) | July 16, 1990 (16. 07. 90) |

| International Searching Authority | Signature of Authorized Officer |
|---|---|
| Japanese Patent Office | |

Form PCT/ISA 210 (second sheet) (January 1985)

FURTHER INFORMATION CONTINUED FROM THE SECOND SHEET

| X | JP, B2, 60-8994 (Matsushita Electric Works, Ltd.), 7 March 1985 (07. 03. 85), (Family: none) | 4 |
| X | JP, A, 59-102883 (Sekisui Chemical Co., Ltd.), 14 June 1984 (14. 06. 84), (Family: none) | 5 |
| X | JP, A, 51-46311 (Kenichi Yamashita) 20 April 1976 (20. 04. 76), (Family: none) | 9 |
| Y | JP, B2, 59-24757 (Maeda Seikan K.K.), | 9 |

V.☐ OBSERVATIONS WHERE CERTAIN CLAIMS WERE FOUND UNSEARCHABLE [1]

This international search report has not been established in respect of certain claims under Article 17(2) (a) for the following reasons:

1.☐ Claim numbers ........ , because they relate to subject matter not required to be searched by this Authority, namely:

2.☐ Claim numbers , because they relate to parts of the international application that do not comply with the prescribed requirements to such an extent that no meaningful international search can be carried out, specifically:

3.☐ Claim numbers ........ , because they are dependent claims and are not drafted in accordance with the second and third sentences of PCT Rule 6.4(a).

VI.☐ OBSERVATIONS WHERE UNITY OF INVENTION IS LACKING [2]

This International Searching Authority found multiple inventions in this international application as follows:

1.☐ As all required additional search fees were timely paid by the applicant, this international search report covers all searchable claims of the international application.

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims; it is covered by claim numbers:

4.☐ As all searchable claims could be searched without effort justifying an additional fee, the International Searching Authority did not invite payment of any additional fee.

Remark on Protest

☐ The additional search fees were accompanied by applicant's protest.

☐ No protest accompanied the payment of additional search fees.

Form PCT/ISA/210 (supplemental sheet (2)) (January 1985)

| | FURTHER INFORMATION CONTINUED FROM THE SECOND SHEET | |
|---|---|---|
| | 12 June 1984 (12. 06. 84), (Family: none) | |
| Y | JP, A, 57-71883 (S.E.C.T.R.A. S.A.), 4 May 1982 (04. 05. 82), (Family: none) | 9 |
| Y | JP, A, 57-149883 (Junjiro Takenobu), 16 September 1982 (16. 09. 82), (Family: none) | 11 |

**V.☐ OBSERVATIONS WHERE CERTAIN CLAIMS WERE FOUND UNSEARCHABLE [1]**

This international search report has not been established in respect of certain claims under Article 17(2) (a) for the following reasons:

1.☐ Claim numbers ........ , because they relate to subject matter not required to be searched by this Authority, namely:

2.☐ Claim numbers ... , because they relate to parts of the international application that do not comply with the prescribed requirements to such an extent that no meaningful international search can be carried out, specifically:

3.☐ Claim numbers ... ... ..., because they are dependent claims and are not drafted in accordance with the second and third sentences of PCT Rule 6.4(a).

**VI.☐ OBSERVATIONS WHERE UNITY OF INVENTION IS LACKING [2]**

This International Searching Authority found multiple inventions in this international application as follows:

1.☐ As all required additional search fees were timely paid by the applicant, this international search report covers all searchable claims of the international application.

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims; it is covered by claim numbers:

4.☐ As all searchable claims could be searched without effort justifying an additional fee, the International Searching Authority did not invite payment of any additional fee.

Remark on Protest

☐ The additional search fees were accompanied by applicant's protest.

☐ No protest accompanied the payment of additional search fees.

Form PCT/ISA/210 (supplemental sheet (2)) (January 1985)